# EUROPÄISCHE PATENTSCHRIFT

(11) **EP 1 474 461 B1**
(45) Veröffentlichungstag und Bekanntmachung des Hinweises auf die Patenterteilung: **19.12.2007**
(21) Anmeldenummer: 03702567.3
(22) Anmeldetag: 30.01.2003
(51) Int. Cl.: C08G 18/32, C08G 18/80, C08G 83/00

(54) **VERFAHREN ZUR HERSTELLUNG HOCHFUNKTIONELLER HOCHVERZWEIGTER POLYHARNSTOFFE**
METHOD FOR THE PRODUCTION OF HIGHLY FUNCTIONAL, HIGHLY BRANCHED POLYUREAS
PROCEDE POUR PRODUIRE DES POLYUREES FORTEMENT RAMIFIEES ET HAUTEMENT FONCTIONNELLES

(30) Priorität: 06.02.2002 DE 10204979
(43) Veröffentlichungstag der Anmeldung: 10.11.2004
(73) Patentinhaber: BASF Aktiengesellschaft, 67056 Ludwigshafen (DE)
(72) Erfinder: BRUCHMANN, Bernd, 67251 Freinsheim (DE)
(86) Internationale Anmeldenummer: PCT/EP2003/000925
(87) Internationale Veröffentlichungsnummer: WO 2003/066702

(56) Entgegenhaltungen:
- EP-A- 1 167 413
- US-A1- 2001 005 738

## Beschreibung

Die vorliegende Erfindung betrifft gezielt aufgebaute hochfunktionelle hochverzweigte Polyharnstoffe auf Basis von Di- oder Polyisocyanaten und Di- oder Polyaminen sowie ein Verfahren zu ihrer Herstellung.

Die erfindungsgemäßen hochfunktionellen hochverzweigten Polyharnstoffe können u.a. als Haftvermittler, Thixotropiermittel oder als Bausteine zur Herstellung von Lacken, Überzügen, Klebstoffen, Dichtmassen, Giesselastomeren oder Schaumstoffen technisch vorteilhaft eingesetzt werden.

Polyharnstoffe werden üblicherweise aus der Reaktion von Isocyanaten mit Wasser oder Isocyanaten mit Aminen erhalten. Die Reaktion ist jedoch sehr exotherm und es werden Produkte erhalten, die uneinheitlich sind und einen hohen Grad an Vernetzung aufweisen. Aus diesem Grund sind Polyharnstoffe in der Regel unlöslich in bekannten organischen Lösemitteln. Siehe dazu auch Becker/Braun, Kunststoff-Handbuch Bd. 7, Polyurethane, Hanser-Verlag 1993.

Definiert aufgebaute, Harnstoffgruppen enthaltende hochfunktionelle Polymere sind ebenfalls bekannt.

WO 98/52995 beschreibt dendrimere, hochdefinierten Polyurethanpolyole, die sich durch Verwendung von Isocyanaten mit einer primären und einer tertiären NCO-Gruppe und Dialkanolaminen mittels eines schalenförmigen (generationenweisen) Aufbaus herstellen lassen. In der Synthese entstehen Harnstoff-Urethane, jedoch mit einem deutlichen Übergewicht der Urethangruppen im Molekül (Verhältnis Harnstoffgruppen zu Urethangruppen 1 : 2).

EP-A-1 026 185 beschreibt die Herstellung von hoch- und hyperverzweigten Polyurethanpolyolen, die ohne Schutzgruppentechniken durch gezielten Aufbau mittels AB₂- und AB₃-Strukturen unter Ausnutzung von intramolekularen Reaktivitätsunterschieden bei den Reaktionspartnern hergestellt werden. Die Reaktion wird abgebrochen durch Zugabe eines der beiden Reaktionspartner im Überschuss. Auch hier werden Aminoalkohole eingesetzt, bei den verknüpfenden Gruppen sind jedoch ebenfalls Urethangruppen dominierend (Verhältnis Harnstoffgruppen zu Urethangruppen 1:2 oder 1:3).

DE-A-100 30 869 äquivalent zu EP-A-1 167 413 beschreibt die Herstellung von mehrfunktionellen Polyisocyanat-Polyadditionsprodukten, bei denen als Isocyanatreaktive Komponenten Aminoalkohole wie auch Di- und Triamine als Harnstoffbildner genannt sind. Diese Amine werden jedoch in Verbindung mit Alkoholen eingesetzt, da die alleinige Reaktion von Diisocyanat und Di- oder Triamin aus Gründen der Exothermie nur schwer beherrschbar ist.

Hochfunktionelle hyperverzweigte Polyharnstoffe wurden beschrieben von A. Kumar und E.W. Meijer, Chem. Commun. 1629 (1998) und von den gleichen Autoren in Polym. Prep. 39, (2), 619 (1998).

Die Produkte wurden hergestellt aus 3,5-Diaminobenzoesäure (1), die in mehreren Reaktions-schritten in das Amin-blockierte Carbonsäureazid (2) überführt wurde. Anschliessend wurde unter Erhitzen und unter Eliminierung von Stickstoff der Polyharnstoff gebildet. Die beschriebenen Produkte zeichneten sich durch ihre extreme Schwerlöslichkeit aus.

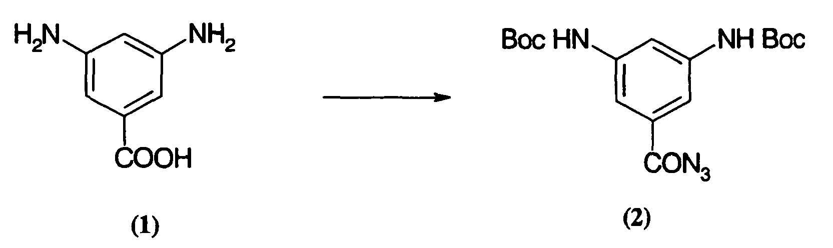

Eine aktuelle Veröffentlichung von A. V. Ambade und A. Kumar, J. Polym. Sci. Part A, Polym. Chem. 39, 1295 - 1304 (2001) beschreibt nochmals hochfunktionelle hyperverzweigte Polyharnstoffe, die analog aus 3,5-Diaminobenzoylazid (2) bzw. aus 5-Aminoisophthaloylazid (3) über die Azid-Route hergestellt werden.

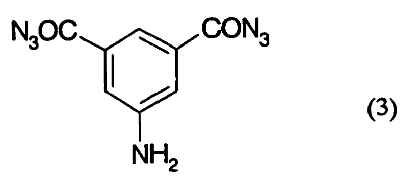

Auch die aus dieser Synthesemethode generierten Produkte werden von den Autoren als unlöslich in allen gängigen Lösemitteln beschrieben.

Die Azid-Route ist aufgrund folgender Überlegungen auch aus technischer Sicht unattraktiv:
- die mehrstufige Synthese unter Anwendung von Schutzgruppentechniken belastet die Produktionskosten
- es lassen sich aufgrund der Azid-Reaktivität nur aromatische Harnstoff-Produkte herstellen
- der Umgang mit aromatischen Carbonsäureaziden bzw. aromatischen Aminen im großen Maßstab ist aus sicherheitstechnischen Gründen bedenklich.

Hochfunktionelle hyperverzweigte aliphatische Polyharnstoffe lassen sich auch gemäß WO 98/50453 herstellen. Nach dem dort beschriebenen Verfahren werden Triamine mit zwei primären und einer sekundären Aminfunktion, z.B. Dipropylentriamin oder Trisaminoethylamin, mit Carbonyldiimidazol als Phosgen-analoge Verbindung umgesetzt. Es entstehen zunächst Imidazolide, die dann intermolekular zu den Polyharnstoffen weiterreagieren. Der Nachteil dieser Synthese ist in dem vergleichsweise hohen Preis für Carbonyldiimidazol zu sehen, zum anderen darin, daß die resultierenden Produkte immer terminale Imidazolid-Gruppen enthalten, die labil sind und über einen Hydrolyseschritt in Harnstoffgruppen umgewandelt werden müssen.

Der Erfindung lag daher die Aufgabe zugrunde, mittels eines technisch einfachen Verfahrens aliphatische und aromatische hochfunktionelle hochverzweigte Polyharnstoffe bereitzustellen, deren Strukturen sich leicht an die Erfordernisse der Anwendung anpassen lassen und die aufgrund ihres definierten Aufbaus vorteilhafte Eigenschaften, wie hohe Funktionalität, hohe Reaktivität und gute Löslichkeit, in sich vereinen können, sowie ein Verfahren zur Herstellung dieser hochfunktionellen hochverzweigten Polyharnstoffe.

Die Aufgabe konnte erfindungsgemäß gelöst werden, indem Di- oder Polyisocyanate mit verkappten NCO-Gruppen mit di- oder mehrfunktionellen primären und / oder sekundären Aminen umgesetzt wurden.

Gegenstand der Erfindung ist somit ein Verfahren zur Herstellung von hochfunktionellen Polyharnstoffen, umfassend die Schritte
a) Umsetzung eines mindestens difunktionellen blockierten Di- oder Polyisocyanats mit mindestens einem mindestens difunktionellen primären und / oder sekundären Amin unter Eliminierung des Blockierungsmittels,
b) intermolekulare Umsetzung der Reaktionsprodukte aus Schritt a) zu einem hochfunktionellen Polyharnstoff, wobei das resultierende einfachste Kondensationsprodukt im Mittel entweder eine verkappte NCO-Gruppe und mehr als eine mit der verkappten NCO-Gruppe reaktive Gruppe oder eine mit verkappten NCO-Gruppen reaktive Gruppe und mehr als eine verkappte NCO-Gruppe enthält.

Gegenstand der Erfindung sind weiterhin die nach diesem Verfahren hergestellten hochfunktionellen hochverzweigten Polyharnstoffe.

Gegenstand der Erfindung ist ferner die Verwendung der erfindungsgemäßen hochfunktionellen hochverzweigten Polyharnstoffe als Haftvermittler, Thixotropiermittel oder als Bausteine zur Herstellung von Lacken, Überzügen, Klebstoffen, Dichtmassen, Giesselastomeren oder Schaumstoffen.

In einer bevorzugten Ausführungsform des Verfahrens zur Herstellung hochfunktioneller hochverzweigter Polyharnstoffe werden als blockierte Polyisocyanate Di- oder Polyurethane eingesetzt, als Blockierungsmittel dienen hierbei Alkohole. Man geht also aus von Di- oder Polyurethanen, die mit mindestens einem di- oder mehrfunktionellen primären oder sekundären Amin unter Eliminierung eines Monoalkohols umgesetzt werden.

Die entsprechenden Di- oder Polyurethane können zum Beispiel hergestellt werden aus der Reaktion von Di- oder Polyisocyanaten mit aliphatischen, araliphatischen oder aromatischen Alkoholen, vorzugsweise Monoalkoholen. Weiterhin können sie beispielsweise dargestellt werden durch Umsetzung von primären Aminen mit Alkohol und Harnstoff gemäß EP-A-18586, durch Umsetzung von primären Aminen mit O-Alkylcarbamaten gemäß EP 18588 oder EP-A- 28338, durch Umsetzung von primären Aminen mit Dimethylcarbonat gemäß EP-A-570071 oder auch durch Umsetzung von Formamiden mit Dimethylcarbonat oder von primären Aminen mit Methylformiat gemäß EP-A-609786.

Allgemein können auch Di- oder Polyurethane verwendet werden, die als Ausgangsprodukte oder Zwischenprodukte bei der Synthese phosgenfrei hergestellter Di- oder Polyisocyanate gemäß den Schriften EP 355443, EP 566925, EP 568782 oder DE 19820114 anfallen.

Bei der Reaktion der Di- oder Polyurethane mit den Di- oder Polyaminen zu den erfindungsgemäßen hochfunktionellen hochverzweigten Polyharnstoffen wird die Reversibilität der Reaktion zwischen Isocyanat und Alkohol gegenüber der Irreversibilität der Reaktion zwischen Isocyanat und Amin bei den gegebenen Reaktionsbedingungen ausgenutzt, um einen gezielten Molekülaufbau zu steuern. Der Alkohol wird hier im Prinzip als Blockierungsmittel für die Isocyanatgruppe, also als Moderator für die extreme Reaktivität des Isocyanats mit dem Amin genutzt.

In einer weiteren Ausführungsform des erfindungsgemäßen Verfahrens geht man aus von Di- oder Polyisocyanaten, deren NCO-Gruppen mit sogenannten Blockierungsreagenzien, wie sie im Stand der Technik beschrieben sind, blockiert werden. Diese Blockierungsreagenzien zeichnen sich dadurch aus, daß sie eine thermisch reversible Blockierung der Isocyanat-Gruppen bei Temperaturen in der Regel unter 160°C gewährleisten. Daher werden derartige Blokkierungsmittel zur Modifikation von Isocyanaten eingesetzt, die in thermisch härtbaren Einkomponenten-Polyurethansystemen Einsatz finden. Diese Blockierungsmittel werden ausführlich beschrieben zum Beispiel in Z.W. Wicks, Prog. Org. Coat. 3 (1975) 73 - 99 und Prog. Org. Coat. 9 (1981), 3 - 28, D.A. Wicks und Z.W. Wicks, Prog. Org. Coat. 36 (1999), 148 -172 und Prog. Org. Coat. 41 (2001), 1 - 83 sowie in Houben-Weyl, Methoden der Organischen Chemie, Bd. XIV/2, 61 ff., Georg Thieme Verlag, Stuttgart 1963. Vorzugsweise werden als Blockierungsmittel Phenole, Caprolactam, 1H-Imidazol, 2-Methylimidazol, 1,2,4-Triazol, 3,5-Dimethylpyrazol, Malonsäuredialkylester, Acetanilid, Acetonoxim oder Butanonoxim verwendet.

Die Reaktion mit dem Di- oder Polyamin zum erfindungsgemäßen hochfunktionellen hochverzweigten Polyharnstoff erfolgt auch hier unter Eliminierung des Blockierungsmittels.

Im folgenden werden daher die mit Alkoholen oder mit Blockierungsmitteln geschützten NCO-Gruppen als "verkappte NCO-Gruppen" bezeichnet.

Die nach dem erfindungsgemäßen Verfahren gebildeten hochfunktionellen hochverzweigten Polyharnstoffe sind nach der Reaktion, also ohne Modifikation, entweder mit Amino- oder mit verkappten NCO-Gruppen terminiert. Sie lösen sich gut in polaren Lösemitteln, zum Beispiel in Alkoholen, wie Methanol, Ethanol, Butanol, Alkohol/Wasser-Mischungen, Dimethylformamid, Dimethylacetamid, N-Methylpyrrolidon, Ethylencarbonat oder Propylencarbonat.

Unter einem hochfunktionellen Polyharnstoff ist im Rahmen dieser Erfindung ein Produkt zu verstehen, das Harnstoffgruppen sowie mindestens drei, bevorzugt mindestens sechs, mehr bevorzugt mindestens zehn funktionelle Gruppen aufweist. Die Anzahl der funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polyharnstoffe der vorliegenden Erfindung weisen zumeist nicht mehr als 100 funktionelle Gruppen, bevorzugt nicht mehr als 50 funktionelle Gruppen auf.

Die bei der Herstellung der hochfunktionellen hochverzweigten Polyharnstoffe verwendeten Amine sind aus Verbindungen ausgewählt, die mindestens zwei mit Urethangruppen reaktive Amin-Gruppen tragen. Verbindungen mit mindestens zwei mit Urethangruppen reaktiven Amin-Gruppen sind zum Beispiel Ethylendiamin, N-Alkylethylendiamin, Propylendiamin, 2,2-Dimethyl-1,3-propandiamin, N-Alkylpropylendiamin, Butylendiamin, N-Alkylbutylendiamin, Hexamethylendiamin, N-Alkylhexamethylendiamin, Toluylendiamin, Diaminodiphenylmethan, Diaminodicyclohexylmethan, Phenylendiamin, Cyclohexyldiamin, Diaminodiphenylsulfon, Isophorondiamin, 2-Butyl-2-ethyl-1,5-pentamethylendiamin, 2,2,4- oder 2,4,4-Trimethyl-1,6-hexamethylen-diamin, 2-Aminopropylcyclohexylamin, 3(4)-Aminomethyl-1-methylcyclohexyl-amin, 1,4-Diamino-4-methylpentan, Amin-terminierte Polyoxyalkylenpolyole (sogenannte Jeffamine), aminierte Polytetramethylenglykole, N-Aminoalkylpiperidine, Ammoniak, Bis(aminoethyl)amin, Bis(aminopropyl)amin, Bis(aminobutyl)amin, Bis(aminopentyl)amin, Bis(aminohexyl)amin, Tris(aminoethyl)amin, Tris(aminopropyl)amin, Tris(aminohexyl)amin, Trisaminohexan, 4-Aminomethyl-1,8-octamethylendiamin, N'-(3-Aminopropyl)-N,N-dimethyl-1,3-propandiamin, Trisaminononan oder Melamin. Weiterhin sind auch beliebige Mischungen aus mindestens zwei der genannten Verbindungen einsetzbar.

Als Di- oder Polyisocyanate kommen die nach dem Stand der Technik bekannten und nachfolgend beispielhaft genannten aliphatischen, cycloaliphatischen, araliphatischen und aromatischen Di- oder Polyisocyanate in Frage. Zu nennen sind hier vorzugsweise 4,4'-Diphenylmethandiisocyanat, die Mischungen aus monomeren Diphenylmethandiisocyanaten und oligomeren Diphenylmethandiisocyanaten (Polymer-MDI), Tetramethylendiisocyanat, Tetramethylendiisocyanat-Trimere, Hexamethylendiisocyanat, Hexamethylendiisocyanat-Trimere, Isophorondiisocyanat-Trimer, 4,4'-Methylenbis(cyclohexyl)-diisocyanat, Xylylendiisocyanat, Tetramethylxylylendiisocyanat Dodecyldiisocyanat, Lysinalkylester-diisocyanat, wobei Alkyl für C₁ bis C₁₀ steht, 1,4-Diisocyanatocyclohexan oder 4-Isocyanatomethyl-1,8-octamethylendiisocyanat.

Besonders bevorzugt zum Aufbau der Polyharnstoffe sind Di- oder Polyisocyanate geeignet, die NCO-Gruppen unterschiedlicher Reaktivität aufweisen. Genannt seien hier 2,4-Toluylendiisocyanat (2,4-TDI), 2,4'-Diphenylmethandiisocyanat (2,4'-MDI), Triisocyanatotoluol, Isophorondiisocyanat (IPDI), 2-Butyl-2-ethylpentamethylendiisocyanat, 2,2,4- oder 2,4,4-Trimethyl-1,6-hexamethylen-diisocyanat, 2-Isocyanatopropylcyclohexylisocyanat, 3(4)-Isocyanatomethyl-1-methylcyclohexyl-isocyanat, 1,4-Diisocyanato-4-methylpentan, 2,4'-Methylenbis(cyclohexyl)diisocyanat und 4-Methyl-cyclohexan-1,3-diisocyanat (H-TDI).

Weiterhin sind zum Aufbau der Polyharnstoffe Isocyanate geeignet, deren NCO-Gruppen zunächst gleich reaktiv sind, bei denen sich jedoch durch Erstaddition eines Reaktanden an einer NCO-Gruppe ein Reaktivitätsabfall bei der zweiten NCO-Gruppe induzieren läßt. Beispiele dafür sind Isocyanate, deren NCO-Gruppen über ein delokalisiertes π-Elektronensystem gekoppelt sind, z.B. 1,3- und 1,4-Phenylendiisocyanat, 1,5-Naphthylendiisocyanat, Diphenyldiisocyanat, Tolidindiisocyanat oder 2,6-Toluylendiisocyanat.

Weiterhin können beispielsweise Oligo- oder Polyisocyanate verwendet werden, die sich aus den oben genannten Di- oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen.

Als Alkohole zur Urethanbildung kommen vorzugsweise lineare oder verzweigte aliphatische Monoalkohole, wie Methanol, Ethanol, Propanol, Butanol, Pentanol, Hexanol, Heptanol, Octanol, Isopropanol, Isobutanol oder 2-Ethyl-1-hexanol oder araliphatische Monoalkohole, wie Benzylalkohol oder Phenylethanol in Betracht. Besonders bevorzugt sind die linearen oder verzweigten aliphatischen Monoalkohole sowie Benzylalkohol.

Bei der Herstellung der hochfunktionellen Polyharnstoffe ist es notwendig, das Verhältnis von Verbindungen mit mindestens zwei mit verkappten NCO-Gruppen reaktiven Amin-Gruppen zu dem verkappten Isocyanat so einzustellen, dass das resultierende einfachste Kondensationsprodukt (im weiteren Kondensationsprodukt (A) genannt) im Mittel entweder eine verkappte NCO-Gruppe und mehr als eine mit der verkappten NCO-Gruppe reaktive Gruppe oder eine mit verkappten NCO-Gruppen reaktive Gruppe und mehr als eine verkappte NCO-Gruppe enthält. Die einfachste Struktur des Kondensationsproduktes (A) aus einem verkappten Di- oder Polyisocyanat (X) und einem Di- oder Polyamin (Y) ergibt dabei die Anordnung XYₙ oder XₙY, wobei n in der Regel eine Zahl zwischen 1 und 6, vorzugsweise zwischen 1 und 4, besonders bevorzugt zwischen 1 und 3 darstellt. Die reaktive Gruppe, die dabei als einzelne Gruppe resultiert, wird im folgenden generell "fokale Gruppe" genannt.

Liegt beispielsweise bei der Herstellung des einfachsten Kondensationsproduktes (A) aus einem verkappten Diisocyanat und einem zweiwertigen Amin das Umsetzungsverhältnis bei 1:1, so resultiert ein Molekül des Typs XY, veranschaulicht durch die allgemeine Formel 1.

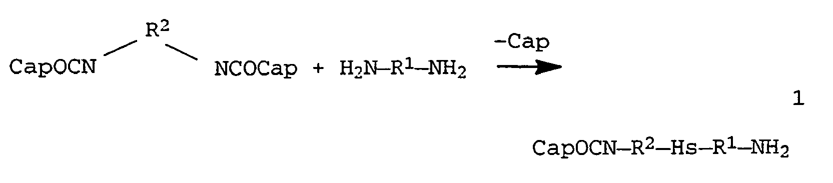

Bei der Herstellung des Kondensationsproduktes (A) aus einem verkappten Diisocyanat und einem dreiwertigen Amin bei einem Umsetzungsverhältnis von 1 : 1 resultiert ein Molekül des Typs XY₂, veranschaulicht durch die allgemeine Formel 2. Fokale Gruppe ist hier eine verkappte Isocyanatgruppe.

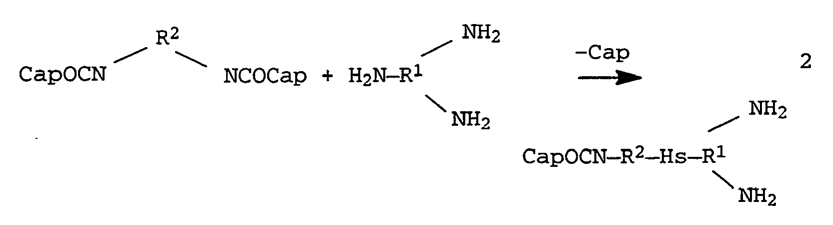

Bei der Herstellung des Kondensationsproduktes (A) aus einem verkappten Diisocyanat und einem vierwertigen Amin ebenfalls mit dem Umsetzungsverhältnis 1 : 1 resultiert ein Molekül des Typs XY₃, veranschaulicht durch die allgemeine Formel 3. Fokale Gruppe ist hier ein verkapptes Isocyanat.

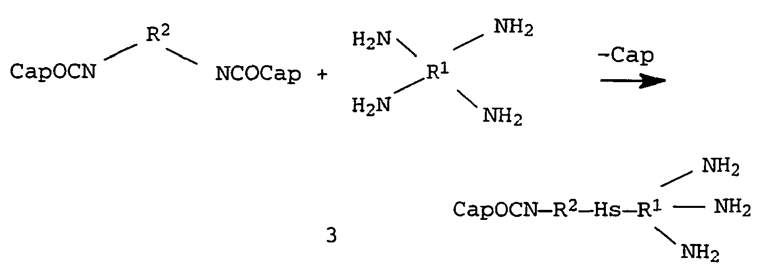

In den Formeln 1 bis 3 bedeuten R¹ einen aliphatischen, aromatischen oder araliphatischen Rest, wie er zum Beispiel durch Entfernung der NCO-Gruppen bei einem Di- oder Polyisocyanatmolekül erhalten wird, R² einen aliphatischen, aromatischen oder araliphatischen Rest, Cap das Verkappungsmittel und Hs eine Harnstoffgruppe.

Weiterhin kann die Herstellung des Kondensationsprodukts (A) zum Beispiel auch aus einem verkappten Diisocyanat und einer dreiwertigen, mit dem verkappten Diisocyanat reaktiven Komponente, veranschaulicht durch die allgemeine Formel 4 erfolgen, wobei das Umsetzungsverhältnis bei molar 2:1 liegt. Hier resultiert ein Molekül des Typs X₂Y, fokale Gruppe ist hier ein Amin. In der Formel 4 haben R¹ und R² die gleiche Bedeutung wie in den Formeln 1 bis 3.

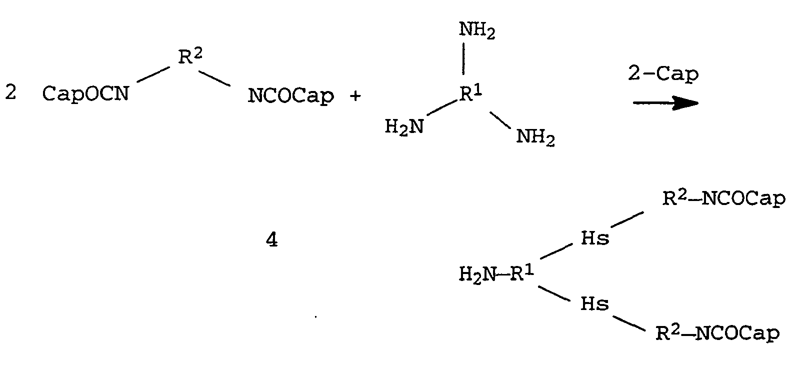

Werden zu den Komponenten zusätzlich difunktionelle Verbindungen, z.B. mit zwei verkappten Isocyanatgruppen oder mit zwei Amingruppen gegeben, so bewirkt dies eine Verlängerung der Ketten, wie beispielsweise in der allgemeinen Formel 5 veranschaulicht. Es resultiert wieder ein Molekül des Typs X₂Y, fokale Gruppe ist ein verkapptes Isocyanat.

In Formel 5 bedeutet R³ einen organischen Rest, R¹, R² und Hs sind wie vorstehend beschrieben definiert.

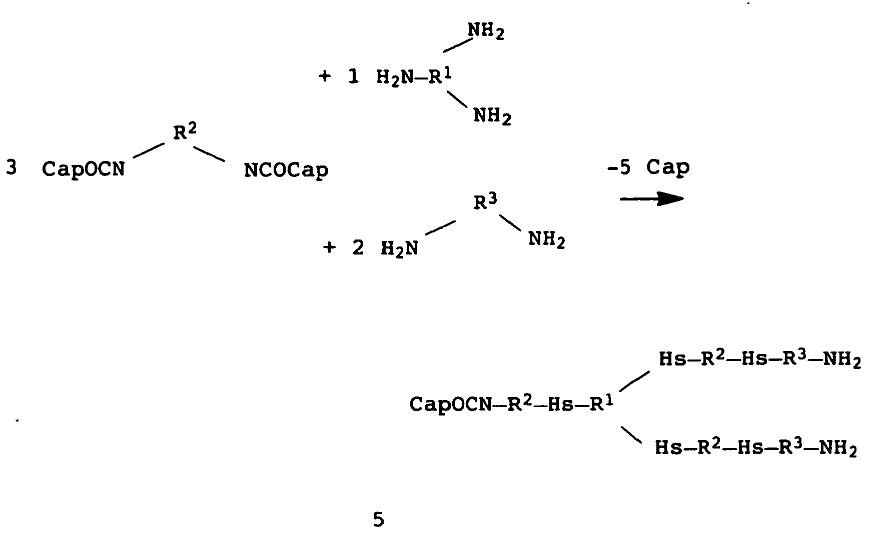

Die beispielhaft in den Formeln 1 - 5 beschriebenen einfachen Kondensationsprodukte (A) reagieren erfindungsgemäß intermolekular unter Bildung von hochfunktionellen Polykondensationsprodukten, im folgenden Polykondensationsprodukte (P) genannt. Die Umsetzung zum Kondensationsprodukt (A) und zum Polykondensationsprodukt (P) erfolgt üblicherweise bei einer Temperatur von 0 bis 250 °C, bevorzugt bei 60 bis 160°C in Substanz oder in Lösung. Dabei können allgemein alle Lösungsmittel verwendet werden, die gegenüber den jeweiligen Edukten inert sind. Bevorzugt verwendet werden organische Lösungsmittel, wie zum Beispiel Decan, Dodecan, Benzol, Toluol, Chlorbenzol, Xylol, Dimethylformamid, Dimethylacetamid oder Solventnaphtha.

In einer bevorzugten Ausführungsform wird die Kondensationsreaktion in Substanz durchgeführt. Das bei der Reaktion mit dem Amin freiwerdende Verkappungsmittel, zum Beispiel der zur Urethanisierung verwendete Alkohol, kann zur Beschleunigung der Reaktion destillativ, gegebenenfalls bei vermindertem Druck, aus dem Reaktionsgleichgewicht entfernt werden.

In einer weiteren bevorzugten Ausführungsform wird der zur Urethanisierung eingesetzte Alkohol als Lösungsmittel für die Reaktion verwendet. Dabei wird die Urethan-Komponente in dem Alkohol gelöst vorgelegt und die Amin-Komponente im entsprechenden Verhältnis zugegeben. Bei Erhöhung der Temperatur wird der als Urethan gebundene Alkohol durch die Aminkomponente verdrängt und es bildet sich der erfindungsgemäße Harnstoff. Die im Überschuss vorliegende Alkoholkomponente fungiert weiterhin als Lösungsmittel für die gebildeten Harnstoffe.

Zur Beschleunigung der Reaktion können auch Katalysatoren oder Katalysatorgemische zugegeben werden. Geeignete Katalysatoren sind im allgemeinen Verbindungen, die Urethan- Reaktionen katalysieren, zum Beispiel Amine, Ammoniumverbindungen, Aluminium-, Zinn-, Zink, Titan-, Zirkon- oder Wismut-organische Verbindungen.

Beispielsweise können Diazabicyclooctan (DABCO), Diazabicyclononen (DBN), Diazabicycloundecen (DBU), Imidazole, wie Imidazol, 1-Methylimidazol, 2-Methylimidazol, 1,2-Dimethylimidazol, Titantetrabutylat, Dibutylzinnoxid, Dibutylzinn-dilaurat, Zinndioctoat, Zirkonacetylacetonat oder Gemische davon eingesetzt werden.

Die Zugabe des Katalysators erfolgt im allgemeinen in einer Menge von 50 bis 10000, bevorzugt von 100 bis 5000 Gew. ppm bezogen auf die Menge des eingesetzten Isocyanats.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren (P) einstellen.

Die Kondensationsprodukte (A) bzw. die Polykondensationsprodukte (P), die bei erhöhter Temperatur hergestellt wurden, sind bei Raumtemperatur üblicherweise über einen längeren Zeitraum stabil.

Aufgrund der Beschaffenheit der Kondensationsprodukte (A) ist es möglich, daß aus der Kondensationsreaktion Polykondensationsprodukte (P) mit unterschiedlichen Strukturen resultieren können, die Verzweigungen, aber keine Vernetzungen aufweisen. Ferner weisen die Polykondensationsprodukte (P) entweder eine verkappte Isocyanatgruppe als fokale Gruppe und mehr als zwei mit verkappten Isocyanatgruppen reaktive Gruppen oder aber eine mit verkapptem Isocyanat reaktive Gruppe als fokale Gruppe und mehr als zwei verkappte Isocyanatgruppen auf. Die Anzahl der reaktiven Gruppen ergibt sich dabei aus der Beschaffenheit der eingesetzten Kondensationsprodukte (A) und dem Polykondensationsgrad.

Beispielsweise kann ein Kondensationsprodukt (A) gemäß der allgemeinen Formel 2 durch dreifache intermolekulare Kondensation zu zwei verschiedenen Polykondensationsprodukten (P), die in den allgemeinen Formeln 6 und 7 wiedergegeben werden, reagieren.

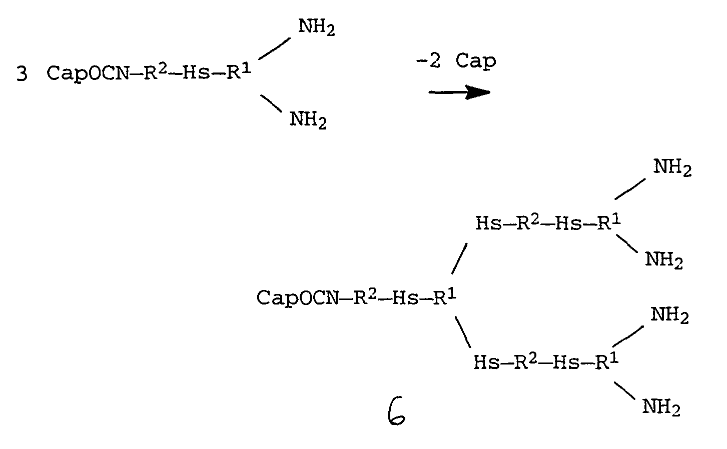

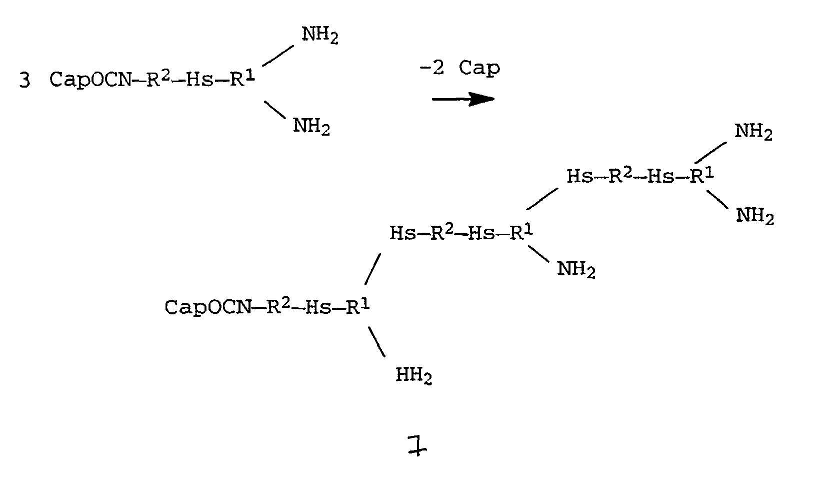

In Formel 6 und 7 sind R¹, R² und Hs wie vorstehend definiert.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (A) oder das Polykondensationsprodukt (P) lagerstabil ist.

In einer bevorzugten Ausführungsform wird, sobald aufgrund der intermolekularen Reaktion des Kondensationsproduktes (A) ein Polykondensationsprodukt (P) mit gewünschten Polykondensationsgrad vorliegt, dem Produkt (P) zum Abbruch der Reaktion ein Produkt mit gegenüber der fokalen Gruppe von (P) reaktiven Gruppen zugesetzt. So kann bei einer verkappten NCO-Gruppe als fokaler Gruppe zum Beispiel ein Mono-, Di- oder Polyamin zugegeben werden. Bei einem Amin als fokaler Gruppe kann dem Produkt (P) beispielsweise ein Mono-, Di- oder Polyurethan, ein Mono-, Di- oder Polyisocyanat, ein Aldehyd, Keton oder ein mit Amin reaktives Säurederivat zugegeben werden.

Die Herstellung der erfindungsgemäßen hochfunktionellen Polyharnstoffe erfolgt zumeist in einem Druckbereich von 2 mbar bis 20 bar, bevorzugt bei Normaldruck, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

In einer weiteren bevorzugten Ausführungsform können die erfindungsgemäßen Polyharnstoffe neben den bereits durch die Reaktion erhaltenden funktionellen Gruppen weitere funktionelle Gruppen erhalten. Die Funktionalisierung kann dabei während des Molekulargewichtsaufbaus oder auch nachträglich, d.h. nach Beendigung der eigentlichen Polykondensation erfolgen.

Gibt man vor oder während des Molekulargewichtsaufbaus Komponenten zu, die neben Amin oder verkappten Isocyanatgruppen weitere funktionelle Gruppen oder funktionelle Elemente besitzen, so erhält man ein Polyharnstoff-Polymer mit statistisch verteilten von den verkappten Isocyanat- oder Amingruppen verschiedenen Funktionalitäten.

Derartige Effekte lassen sich zum Beispiel durch Zusatz von Verbindungen während der Polykondensation erzielen, die neben Amingruppen oder verkappten Isocyanatgruppen weitere funktionelle Gruppen oder funktionelle Elemente, wie Hydroxylgruppen, Mercaptogruppen, tertiäre Amingruppen, Ethergruppen, Derivate von Carbonsäuren, Derivate von Sulfonsäuren, Derivate von Phosphonsäuren, Silangruppen, Siloxangruppen, Arylreste oder langkettige Alkylreste tragen. Zur Modifikation mittels OH-Gruppen lassen sich beispielsweise Ethanolamin, N-Methylethanolamin, Propanolamin, Isopropanolamin, 2-(Butylamino)ethanol, 2-(Cyclohexylamino)ethanol, 2-Amino-1-butanol, 2-(2'-Aminoethoxy)ethanol oder höhere Alkoxylierungsprodukte des Ammoniaks, 4-Hydroxypiperidin, 1-Hydroxyethylpiperazin, Diethanolamin, Dipropanolamin, Diisopropanolamin, Tris(hydroxymethyl)aminomethan oder Tris(hydroxyethyl)aminomethan verwenden. Für die Modifikation mit Mercaptogruppen lässt sich zum Beispiel Cysteamin einsetzten. Tertiäre Aminogruppen lassen sich zum Beispiel durch Einbau von N-Methyldiethylentriamin oder N,N-Dimethylethylendiamin erzeugen. Ethergruppen können zum Beispiel durch Einkondensation von Amin-terminierten Polyetherolen (sogenannten Jeffaminen) generiert werden. Säuregruppen können zum Beispiel durch Einbau von Aminocarbonsäuren, Aminosulfonsäuren oder Aminophosphonsäuren erhalten werden. Silizium-Gruppen können zum Beispiel durch Einbau von Hexamethyldisilazan generiert werden. Durch Reaktion mit Alkylaminen oder Alkylisocyanaten lassen sich langkettige Alkylreste einbringen.

Eine nachträgliche Funktionalisierung kann man erhalten, indem Aminogruppen enthaltende hochfunktionelle Polyharnstoffe zu Beispiel durch Zugabe von Säuregruppen-, Keton- oder Aldehydgruppen enthaltenden Molekülen oder mit aktivierte Doppelbindungen, zum Beispiel acrylische Doppelbindungen, enthaltenden Molekülen, modifiziert werden. Beispielsweise lassen sich Säuregruppen enthaltende Polyharnstoffe durch Umsetzung mit Acrylsäure oder durch Reaktion mit Aktivestern oder Anhydriden von Dicarbonsäuren erhalten.

Weiterhin können Aminogruppen enthaltende hochfunktionelle Polyharnstoffe auch durch Umsetzung mit Alkylenoxiden, zum Beispiel Ethylenoxid, Propylenoxid oder Butylenoxid, in hochfunktionelle Polyharnstoff-Polyole überführt werden.

Durch Salzbildung mit Protonensäuren oder durch Quaternisierung der Aminfunktionen mit z.B. Alkylierungsreagenzien, wie Methylhalogeniden oder Dialkylsulfaten, können die Polyharnstoffe wasserlöslich oder wasserdispergierbar eingestellt werden.

Um eine Hydrophobierung zu erreichen, können Amin-terminierten Produkte z.B. mit gesättigten oder ungesättigten langkettigen Carbonsäuren, deren gegenüber Amin-Gruppen reaktiven Derivaten oder auch mit aliphatischen Isocyanaten umgesetzt oder teilumgesetzt werden. Mit verkappten Isocyanatgruppen terminierte Polyharnstoffe lassen sich zum Beispiel mit langkettigen Alkylaminen oder langkettigen aliphatischen Monoalkoholen zu hydrophoberen Produkten umsetzten.

Verkappte NCO-Gruppen enthaltende hochfunktionelle Polyharnstoffe können in zwei Kategorien eingeteilt werden: Urethangruppen enthaltende hochfunktionelle Polyharnstoffe können zum Beispiel durch Zugabe von Molekülen mit mindestens einer primären oder sekundären Amin-Funktion und zusätzlichen anderen funktionellen Gruppen , z.B. Hydroxylgruppen, Säuregruppen, Ether- oder Estergruppen, tertiären Aminogruppen, Silan- oder Siloxangruppen, entweder "in situ" oder auch nachträglich modifiziert werden.

Blockierungsmittel enthaltende hochfunktionelle Polyharnstoffe können ebenfalls gemäß den Urethangruppen enthaltenden Polyharnstoffen modifiziert werden. Durch die Möglichkeit der Deblockierung beim Erwärmen oder Erhitzen können diese Moleküle jedoch auch NCO-Gruppen freisetzen, so daß sie auch z.B. mit OH-Gruppen enthaltenden Molekülen leicht reagieren können.

Ein großer Vorteil des erfindungsgemäßen Verfahren liegt in seiner Wirtschaftlichkeit. Sowohl die Umsetzung zu einem Kondensationsprodukt (A) oder Polykondensationsprodukt (P) als auch die Reaktion von (A) oder (P) zu Polyharnstoffen mit anderen funktionellen Gruppen oder Elementen kann in einer Reaktionsvorrichtung erfolgen, was technisch und wirtschaftlich vorteilhaft ist.

Die vorliegende Erfindung soll anhand der nachfolgenden Beispiele näher erläutert werden.

### Beispiel 1

### Herstellung des Diurethans aus Isophorondiisocyanat (IPDI) und n-Butanol

2,1 Mol n-Butanol wurden 50%ig in trockenem 2-Butanon vorgelegt, auf 60°C erwärmt und 300 ppm (bezogen auf Masse des Isocyanats) Dibutylzinndilaurat zugesetzt. Anschließend wurde 1 Mol IPDI innerhalb 30 min zugegeben, wobei die Reaktionstemperatur mittels Kühlung bei 60°C gehalten wurde. Nach Zugabe des Isocyanats wurde noch 1 h bei 70°C zur Vervollständigung der Urethanreaktion nachgerührt. Anschließend wurde das Lösemittel am Rotationsverdampfer bei 60°C und vermindertem Druck entfernt. Das Produkt fiel als blaßgelbes Oel an, das direkt weiterverarbeitet wurde.

### Beispiel 2

### Herstellung des Diurethans aus Hexamethylendiisocyanat (HDI) und n-Butanol

2,1 Mol n-Butanol wurden 20%ig in trockenem 2-Butanon vorgelegt, auf 60°C erwärmt und 300 ppm (bezogen auf Masse des Isocyanats) Dibutylzinndilaurat zugesetzt. Anschließend wurde 1 Mol HDI innerhalb 60 min zugegeben, wobei die Reaktionstemperatur mittels Kühlung bei 60°C gehalten wurde. Nach Zugabe des Isocyanats wurde noch 1 h bei 60°C zur Vervollständigung der Urethanreaktion nachgerührt. Anschließend wurde das Lösemittel am Rotationsverdampfer bei 60°C und vermindertem Druck entfernt. Das Produkt fiel als Feststoff an, der aus n-Heptan umkristallisiert und im Vakuum bei 40°C getrocknet wurde. Der Schmelzpunkt betrug 92-94°C.

### Beispiel 3

### Herstellung des Diurethans aus 2,4-Toluylendiisocyanat (TDI) und n-Butanol

2,1 Mol Butanol wurden 50%ig in trockenem 2-Butanon vorgelegt, auf 60°C erwärmt und 200 ppm (bezogen auf Masse des Isocyanats) Dibutylzinndilaurat zugesetzt. Anschließend wurde 1 Mol TDI innerhalb 30 min zugegeben, wobei die Reaktionstemperatur mittels Kühlung bei 60°C gehalten wurde. Nach Zugabe des Isocyanats wurde noch 1 h bei 60°C zur Vervollständigung der Urethanreaktion nachgerührt. Anschließend wurde das Lösemittel am Rotationsverdampfer bei 60°C und vermindertem Druck entfernt und der Rückstand in 500 ml n-Hexan warm gelöst. Über Nacht fiel das Diurethan im Kühlschrank bei 3°C als Feststoff aus, der abgesaugt und im Vakuum bei 40°C getrocknet wurde. Der Schmelzpunkt betrug 84°C.

### Beispiele 4 - 8

### Erfindungsgemäße Polyharnstoffe, Herstellung in Substanz mit Monoalkoholen als Verkappungmittel für Isocyanat-Gruppen, molares Einsatzverhältnis Diurethan : Triamin ist 1:1

In einem Reaktionsgefäß mit Rührer, Innenthermometer, Stickstoffeinleitrohr und absteigendem Kühler wurden 0,5 Mol des Urethans gemäß Beispiel 1 oder Beispiel 3, gegebenenfalls 1000 ppm (bezogen auf Diurethan) Katalysator sowie 0,5 Mol Triamin gemäß Tabelle 1 zugegeben, die Temperatur auf den in Tabelle 1 angegebenen Wert erhöht und entsprechend der angegebenen Reaktionszeit reagieren gelassen. Freiwerdendes Butanol wurde bei 250 mbar abdestilliert. Anschliessend wurde das Produktgemisch auf Raumtemperatur abgekühlt und für die GPC-Analytik in Dimethylacetamid aufgenommen.

**Tabelle 1: Erfindungsgemäße Polyharnstoffe, hergestellt in Substanz, molares Verhältnis Diurethan : Triamin = 1:1**

| Beispiel | Isocyanat | Amin | Katalysator | Zeit / Temperatur | Produkt, Molekulargewicht aus GPC-Daten | |
|---|---|---|---|---|---|---|
| | | | | | (PMMA-Eichung) | |
| | | | | | Mw | Mn |
| 4 | IPDI | DETA | DBTL | 2 h bei 150 °C | 1110 | 570 |
| 5 | IPDI | DHTA | DBTL | 2 h bei 100 °C, | 14000 | 1790 |
| | | | | dann | | |
| | | | | 2 h bei 140 °C | | |
| 6 | TDI | DPTA | DBTL | 2 h bei 120 °C | 1960 | 830 |
| 7 | TDI | DHTA | DBTL | 2 h bei 120 °C | 5200 | 1480 |
| 8 | TDI | DETA | - | 2 h bei 120 °C | 1370 | 720 |

Die Produkte 6 - 8 fallen nach beendeter Reaktion bei 120° als Feststoffe an.
IPDI: Isophorondiisocyanat
TDI: 2,4-Toluylendiisocyanat
DBTL: Dibutylzinn-dilaurat
DETA: Diethylentriamin
DPTA: Dipropylentriamin
DHTA: Dihexamethylentriamin

### Beispiele 9 - 12

### Erfindungsgemäße Polyharnstoffe, Herstellung in Substanz mit Monoalkohol als Verkappungsmittel für Isocyanatgruppen, molares Einsatzverhältnis Diurethan : Triamin ist 2:1

In einem Reaktionsgefäß mit Rührer, Innenthermometer, Stickstoffeinleitrohr und absteigendem Kühler wurden 1 Mol des Urethans gemäß den Beispielen 1 - 3, 1000 ppm (bezogen auf Diurethan) Dibutylzinndilaurat sowie 0,5 Mol Triamin gemäß Tabelle 1 zugegeben, die Temperatur auf den in Tabelle 1 angegebenen Wert erhöht und entsprechend der angegebenen Reaktionszeit reagieren gelassen. Freiwerdendes Butanol wurde bei 250 mbar abdestilliert. Anschliessend wurde das Produktgemisch auf Raumtemperatur abgekühlt und für die GPC-Analytik in Dimethylacetamid aufgenommen.

**Tabelle 2: Erfindungsgemäße Polyharnstoffe, hergestellt in Substanz, molares Verhältnis Diurethan: Triamin = 2:1**

| Beispiel | Isocyanat | Amin | Zeit / Temperatur | Produkt, Molekulargewicht aus GPC-Daten (PMMA-Eichung) | |
|---|---|---|---|---|---|
| | | | | Mw | Mn |
| 9 | IPDI | DHTA | 2 h bei 120 °C, | 6100 | 1150 |
| | | | dann | | |
| | | | 2 h bei 150°C | | |
| 10 | HDI | DHTA | 2 h bei 120 °C, | 3140 | 1060 |
| | | | dann | | |
| | | | 2 h bei 150 °C | | |
| 11 | TDI | DETA | 2 h bei 120 °C, | 2930 | 1070 |
| | | | dann | | |
| | | | 0,5 h bei 140°C | | |
| 12 | TDI | DHTA | 1 h bei 130 °C | 6300 | 1570 |

| | | | | | |
|---|---|---|---|---|---|
| HDI: 1,6-Hexamethylendiisocyanat | | | | | |

### Beispiel 13

### Erfindungsgemäßer Polyharnstoff, Herstellung in Dimethylacetamid als Lösungmittel, molares Einsatzverhältnis Diurethan : Triamin ist 2:1

In einem Reaktionsgefäß mit Rührer, Innenthermometer, Stickstoffeinleitrohr wurden 1 Mol des Urethans gemäß Beispiel 3, 1000 ppm (bezogen auf Diurethan) Dibutylzinndilaurat, 300 ml trockenes Dimethylacetamid sowie 0,5 Mol Dipropylentriamin zugegeben, die Temperatur auf 120°C erhöht und 7 h bei dieser Temperatur reagieren gelassen. Anschliessend wurde die Lösung auf Raumtemperatur abgekühlt und mittels GPC-Analytik analysiert.
Mw = 3240 g/mol, Mn = 660g/mol.

### Beispiele 14 - 18

### Erfindungsgemäße Polyharnstoffe, Herstellung in Alkoholen als Lösungmittel, molares Einsatzverhältnis Isocyanat : Triamin ist 2:1

In einem Reaktionsgefäß mit Rührer, Innenthermometer, Stickstoffeinleitrohr wurden unter Begasung mit trockenem Stickstoff 10 Mol des wasserfreien Alkohols nach Tabelle 3 vorgelegt und 1000 ppm (bezogen auf Isocyanat) Katalysator zugegeben. Anschließend wurde die Lösung auf 60°C erwärmt und 1 Mol des Isocyanats so zugegeben, daß die Temperatur der Reaktionsmischung 70°C nicht überschritt. Nach Zugabe des Isocyanats wurde noch 1 h bei 70°C gerührt. Anschliessend wurden 0,5 Mol des Amins zugegeben, die Temperatur auf den in Tabelle 3 angegebenen Wert erhöht und bei dieser Temperatur entsprechend dem in der Tabelle angegebenen Zeitraum reagieren gelassen. Danach wurde die Lösung auf Raumtemperatur abgekühlt und mittels GPC-Analytik analysiert.

**Tabelle 3: Erfindungsgemäße Polyharnstoffe, hergestellt in alkoholischer Lösung, molares Verhältnis Isocyanat : Triamin = 2:1**

| Beispiel | Isocyanat | Alkohol | Amin | Katalysator | Zeit / Temperatur | Produkt, Molekulargewicht aus GPC-Daten | |
|---|---|---|---|---|---|---|---|
| | | | | | | (PMMA-Eichung) | |
| | | | | | | Mw | Mn |
| 14 | TDI | n-Butanol | DETA | DBTL | 9 h bei 130 °C | 4410 | 2500 |
| 15 | TDI | n-Butanol | DHTA | DABCO | 10 h bei 130 °C | 8300 | 2700 |
| 16 | TDI | Iso-butanol | DETA | DBTL | 10 h bei 120 °C | 2600 | 1520 |
| 17 | TDI | 2-Ethyl-hexanol | DETA | DBTL | 7 h bei 130 °C | 3740 | 1970 |
| 18 | HI 100 | n-Butanol | D-230 | DBTL | 14 h bei 125°C | 2330 | 1560 |

| | | | | | | | |
|---|---|---|---|---|---|---|---|
| DABCO: Diazabicyclooctan. HI 100: Basonat® HI 100 (BASF AG), Polyisocyanurat auf HDI-Basis, mittlere NCO-Funktionalität ca. 3,7, mittlere Molmasse Mn ca. 610 g/mol. D-230: Jeffamin® D-230 (Huntsman Corp.), difunktionelles Aminogruppen terminiertes Polyetherol, mittlere Molmasse Mn ca. 230 g/mol. | | | | | | | |

### Beispiele 19 - 21

### Erfindungsgemäße Polyharnstoffe mit chemischer Modifikation

In einem Reaktionsgefäß mit Rührer, Innenthermometer, Stickstoffeinleitrohr wurde unter Begasung mit trockenem Stickstoff die in Tabelle 4 angegebene Menge des wasserfreien Alkohols oder der Alkoholmischung vorgelegt und 1000 ppm (bezogen auf Isocyanat) Dibutylzinndilaurat zugegeben. Anschließend wurde die Lösung auf 60°C erwärmt und 1 Mol des Isocyanats so zugegeben, daß die Temperatur der Reaktionsmischung 70°C nicht überschritt. Nach Zugabe des Isocyanats wurde noch 1 h bei 70°C gerührt. Anschliessend wurde die in Tabelle 4 angegebene Menge des Amins oder des Amingemisches zugegeben, die Temperatur auf den in Tabelle 4 angegebenen Wert erhöht und bei dieser Temperatur entsprechend dem in der Tabelle angegebenen Zeitraum reagieren gelassen. Danach wurde die Lösung auf Raumtemperatur abgekühlt und mittels GPC-Analytik analysiert.

In den Beispielen 19 und 20 wurden die Polyharnstoffe mittels Polyetherol-Segmenten beziehungsweise mit OH-Gruppen hydrophil, in Beispiel 21 mit Alkylketten hydrophob modifiziert.

**Tabelle 4: Erfindungsgemäße Polyharnstoffe mit chemischer Modifikation**

| Beispiel | Isocyanat | Alkohol oder Alkoholmischung | Amin oder Aminmischung | Zeit / Temperatur | Produkt, Molekulargewicht aus GPC-Daten | |
|---|---|---|---|---|---|---|
| | | | | | (PMMA-Eichung) | |
| | | | | | Mw | Mn |
| 19 | TDI | 10 Mol n-Butanol | 0,5 Mol DETA | 5 h bei 130 °C | 12300 | 6200 |
| | | + | | | | |
| | | 0,2 Mol Lupranol 2080 | | | | |
| 20 | TDI | 10 Mol n-Butanol | 0,5 Mol DETA | 20 h bei 125 °C | 2330 | 1700 |
| | | | + | | | |
| | | | 0,5 Mol Diethanolamin | | | |
| 21 | TDI | 10 Mol n-Butanol | 0,45 Mol DETA | 7 h bei 125 °C | 3110 | 1940 |
| | | | + | | | |
| | | | 0,5 Mol Octylamin | | | |

| | | | | | | |
|---|---|---|---|---|---|---|
| Lupranol®2080: Polyoxyethylen-polyoxypropylentriol (BASF AG), OH-Zahl 48 mg KOH/g, mittlere Molmasse Mn ca. 3000 g/mol. | | | | | | |

### Beispiele 22 - 25

### Erfindungsgemäße Polyharnstoffe, Herstellung aus mit Blockierungsmitteln verkappten Isocyanaten, molares Einsatzverhältnis Isocyanat : Triamin ist 2:1

In einem Reaktionsgefäß mit Rührer, Innenthermometer, Stickstoffeinleitrohr wurden unter Begasung mit trockenem Stickstoff 0,5 Mol Isocyanat und 1000 g trockenes Dimethylacetamid nach Tabelle 5 vorgelegt und gegebenenfalls 1000 ppm Katalysator (bezogen auf Isocyanat) zugegeben. Anschließend wurde die Lösung auf 60°C erwärmt und das Blockierungsmittel, gelöst in 500 g Dimethylacetamid so zugegeben, daß die Temperatur der Reaktionsmischung 70°C nicht überschritt. Nach Zugabe des Blockierungsmittels wurde noch 1 h bei 70°C gerührt und die Mischung anschliessend bei Versuch 22 und 23 auf 10°C, bei Versuch 24 und 25 auf 0°C abgekühlt. Danach wurden 0,25 Mol des Amins zugegeben, die Temperatur auf den in Tabelle 5 angegebenen Wert erhöht und bei dieser Temperatur entsprechend dem in der Tabelle angegebenen Zeitraum reagieren gelassen. Anschliessend wurde die Lösung auf Raumtemperatur abgekühlt und mittels GPC-Analytik analysiert.

**Tabelle 5: Erfindungsgemäße Polyharnstoffe, Herstellung aus mit Blockierungsmittlen verkappten Isocyanaten, molares Verhältnis Isocyanat : Triamin = 2:1**

| Beispiel | Isocyanat | Blockierungsmittel | Amin | Katalysator | Zeit / Temperatur | Produkt, Molekulargewicht aus GPC-Daten | |
|---|---|---|---|---|---|---|---|
| | | | | | | (PMMA-Eichung) | |
| | | | | | | Mw | Mn |
| 22 | TDI | Butanonoxim 0,75 Mol | DETA | DBTL | 2 h bei 80 °C | 28500 | 6800 |
| | | + | | | | | |
| | | n-Butanol 0,25 Mol | | | | | |
| 23 | IPDI | 1 Mol 3,5-Dimethylpyrazol | DETA | DBTL | 2 h bei 80 °C und 2 h bei 100°C | 108000 | 8200 |
| 24 | TDI | 1 Mol 3,5-Dimethylpyrazol | DETA | - | 2 h bei 100 °C | 48600 | 12200 |
| 25 | TDI | 0,5 Mol 3,5-Dimethylpyrazol | DETA | DBTL | 2 h bei 130 °C | 7500 | 3300 |
| | | + | | | | | |
| | | 0,5 Mol n-Butanol | | | | | |

## Patentansprüche

1. Verfahren zur Herstellung von hochfunktionellen hochverzweigten Polyharnstoffen, umfassend die Schritte
a) Umsetzung eines mindestens difunktionellen verkappten Di- oder Polyisocyanats mit mindestens einem mindestens difunktionellen primären und/oder sekundären Amin unter Eliminierung des Blockierungsmittel,
b) intermolekuare Umsetzung der Reaktionsprodukte aus Schritt a) zu einem hochfunktionellen hochverzweigten Polyharnstoff,
wobei das resultierende einfachste Kondensationsprodukt im Mittel entweder eine verkappte NCO-Gruppe und mehr als eine mit der verkappten NCO-Gruppe reaktive Gruppe oder eine mit verkappten NCO-Gruppen reaktive Gruppe und mehr als eine verkappte NCO-Gruppe enthält.

2. Verfahren nach Anspruch 1, **dadurch gekennzeichnet, daß** die verkappten Di- oder Polyisocyanate ausgewählt sind aus der Gruppe, enthaltend verkappte aliphatische, araliphatische und aromatische Di- und/oder Polyisocyanate.

3. Verfahren nach Anspruch 1, **dadurch gekennzeichnet, daß** als difunktionelle verkappte Di- oder Polyisocyanate Di- oder Polyurethane eingesetzt werden.

4. Verfahren nach Anspruch 1, **dadurch gekennzeichnet, daß** die Verkappungsmittel ausgewählt sind aus der Gruppe, enthaltend Monoalkohole, Phenole, Caprolactam, 1H-Imidazol, 2-Methylimidazol, 1,2,4-Triazol, 3,5-Dimethylpyrazol, Malonsäuredialkylester, Acetanilid, Acetonoxim und Butanonoxim.

5. Verfahren nach Anspruch 1, **dadurch gekennzeichnet, daß** die Verkappungsmittel Monoalkohole sind.

6. Verfahren nach einem der Ansprüche 1 bis 5, **dadurch gekennzeichnet, daß** sich an Schritt b) ein Schritt c) anschließt, bei dem die funktionellen Gruppen der Produkte aus Schritt b) mit Verbindungen umgesetzt werden, die mit diesen funktionellen Gruppen reaktiv sind.

7. Verfahren nach Anspruch 1, **dadurch gekennzeichnet, daß** die Umsetzung in Lösung durchgeführt wird.

8. Verfahren nach Anspruch 7, **dadurch gekennzeichnet, daß** als Lösungsmittel die Verbindung, die zur Verkappung des Isocyanats eingesetzt wurde, verwendet wird.

9. Hochfunktionelle hochverzweigte Polyharnstoffe, herstellbar nach einem der Ansprüche 1 bis 6.

10. Verwendung der hochfunktionellen hochverzweigten Polyharnstoffe nach Anspruch 9 als Haftvermittler, Thixotropiermittel oder als Bausteine zur Herstellung von Lacken, Überzügen, Klebstoffen, Dichtmassen, Giesselastomeren oder Schaumstoffen.

## Claims

1. A process for preparing high-functionality, highly branched polyureas, comprising the steps
a) reaction of an at least bifunctional capped diisocyanate or polyisocyanate with at least one at least bifunctional primary and/or secondary amine with elimination of the capping agent,
b) intramolecular reaction of the reaction product from step a) to form a high-functionality, highly branched polyurea,
wherein the resulting simplest condensation product comprises on average either one capped NCO group and more than one group which is reactive toward the capped NCO group or one group which is reactive toward capped NCO groups and more than one capped NCO group.

2. The process according to claim 1, wherein the capped diisocyanates or polyisocyanates are selected from the group comprising capped aliphatic, araliphatic and aromatic diisocyanates and polyisocyanates.

3. The process according to claim 1, wherein diurethanes or polyurethanes are used as bifunctional capped diisocyanates or polyisocyanates.

4. The process according to claim 1, wherein the capping agents are selected from the group comprising monoalcohols, phenols, caprolactam, 1H-imidazole, 2-methylimidazole, 1,2,4-triazole, 3,5-dimethylpyrazole, dialkyl malonates, acetanilide, acetone oxime and butanone oxime.

5. The process according to claim 1, wherein the capping agents are monoalcohols.

6. The process according to any of claims 1 to 5, wherein step b) is followed by a step c) in which the functional groups of the products from step b) are reacted with compounds which are reactive toward these functional groups.

7. The process according to claim 1, wherein the reaction is carried out in solution.

8. The process according to claim 7, wherein the compound which has been used for capping the isocyanate is used as solvent.

9. A high-functionality, highly branched polyurea which can be prepared according to any of claims 1 to 6.

10. The use of a high-functionality, highly branched polyurea according to claim 9 as adhesion promoter, thixotrope or as building block for producing paints and varnishes, coatings, adhesives, sealants, castable elastomers or foams.

## Revendications

1. Procédé de préparation de polyurées fortement ramifiées et hautement fonctionnelles, comprenant les étapes suivantes :
a) réaction d'un diisocyanate ou d'un polyisocyanate bloqué au moins difonctionnel avec au moins une amine primaire et/ou secondaire au moins difonctionnelle avec élimination de l'agent de blocage,
b) réaction intermoléculaire des produits de réaction de l'étape a) pour former une polyurée fortement ramifiée et hautement fonctionnelle,
dans lequel le produit de condensation le plus simple résultant contient en moyenne, soit un groupe NCO bloqué et plus d'un groupe réactif vis-à-vis du groupe NCO bloqué, soit un groupe réactif vis-à-vis de groupes NCO bloqués et plus d'un groupe NCO bloqué.

2. Procédé suivant la revendication 1, **caractérisé en ce que** les diisocyanates ou polyisocyanates bloqués sont choisis dans le groupe comprenant des diisocyanates et/ou polyisocyanates aliphatiques, araliphatiques et aromatiques bloqués.

3. Procédé suivant la revendication 1, **caractérisé en ce que** l'on met en oeuvre en tant que diisocyanates ou polyisocyanates difonctionnels bloqués des diuréthannes ou polyuréthannes.

4. Procédé suivant la revendication 1, **caractérisé en ce que** les agents de blocage sont choisis dans le groupe comprenant des monoalcools, des phénols, du caprolactame, du 1H-imidazole, du 2-méthylimidazole, du 1,2,4-triazole, du 3,5-diméthylpyrazole, des esters dialkyliques d'acide malonique, de l'acétanilide, de l'acétonoxime et du butanonoxime.

5. Procédé suivant la revendication 1, **caractérisé en ce que** les agents de blocage sont des monoalcools.

6. Procédé suivant l'une quelconque des revendications 1 à 5, **caractérisé en ce que** l'étape b) est suivie d'une étape c), dans laquelle on fait réagir les groupes fonctionnels des produits de réaction de l'étape b) avec des composés réactifs avec ces groupes fonctionnels.

7. Procédé suivant la revendication 1, **caractérisé en ce que** la réaction est entreprise en solution.

8. Procédé suivant la revendication 1, **caractérisé en ce que** l'on utilise en tant que solvant le composé mis en oeuvre pour le blocage de l'isocyanate.

9. Polyurées fortement ramifiées et hautement fonctionnelles, que l'on peut préparer suivant l'une quelconque des revendications 1 à 6.

10. Utilisation des polyurées fortement ramifiées et hautement fonctionnelles suivant la revendication 9 en tant qu'agents adhésifs, agents thixotropes ou en tant qu'éléments constitutifs pour la préparation de vernis, de revêtements, d'adhésifs, de masses d'étanchéité, d'élastomères moulés ou de mousses.
